# EUROPEAN PATENT SPECIFICATION

(11) **EP 2 607 239 B1**
(45) Date of publication and mention of the grant of the patent: **07.10.2020**
(21) Application number: 12199161.6
(22) Date of filing: 21.12.2012
(51) Int. Cl.: B64F 5/40, G06Q 10/10

(54) **System and method for remote and automatic assessment of structural damage and repair**
System und Verfahren zur automatischen Fern-Bewertung von Strukturschaden und Reparatur
Système et procédé d'évaluation automatique et à distance des dommages structurels et des réparations

(30) Priority: 22.12.2011 US 201113335268
(43) Date of publication of application: 26.06.2013
(73) Proprietor: Embraer, S.A., São José dos Campos, 12227-901- SP (BR)
(72) Inventor: Wallner, Cassio, 12227-901 São José Dos Campos - SP (BR); Da Silva, Paulo Anchieta, 12227-901 São José Dos Campos - SP (BR); Rogulski, Ricardo, 12227-901 São José Dos Campos - SP (BR); Rulli, Ricardo Pinheiro, 12227-901 São José Dos Campos - SP (BR); Lazanha, Tomaz, 12227-901 São José Dos Campos - SP (BR)
(74) Representative: Liesegang, Eva

(56) References cited:
- WO-A2-2007/028011
- WO-A2-2008/100682
- US-A- 5 828 969
- US-A1- 2003 204 332
- US-A1- 2007 010 923
- US-A1- 2009 138 139

## Description

### FIELD

The technology herein relates to systems (herein called "iSRM") and methods for remote assessment of structural damage, repair and management of applicable maintenance information, and more particularly to such systems and methods for use with aircraft maintenance and repair.

WO 2007/028 011 A2 describes an automated damage assessment, report and disposition applied to a variety of structures, including aircrafts. The system performs the damage identification, assessment and reporting. A maintainer may determine whether the damage falls within acceptable damage limits prior to characterizing the damage using damage reporting tool and further, the maintainer may access a searchable database and determine whether the observed damage is within an acceptable range. The system determines whether the same or similar damage is stored in the searchable/historical database. It then determines whether it is acceptable for automated analysis and/or disposition. An automated analysis may include performing static and fatigue analysis based on the damage data. If an automated analysis is not carried out, a custom disposition is performed.

US 2003/204 332 A1 describes a system for analyzing damage to a structure comprising a processor; a damage disposition program executed by this processor and operating to determine an appropriate repair procedure for repairing the damage to said structure. This system has also a predefined set of damages class determination rules that is used by said damage disposition program to determine a damage class.

US 2007/010 923 A1 describes a diagnostic device for aircraft comprising a central unit that has access to a database in which there are stored information on the aircraft fleet and the aircraft repair manual. The central unit communicates to the outside with a technical center and a aircraft manufacturer. Further, this device has a portable device equipped with visual display means which communicated with the central unit in an interactive form.

### BACKGROUND AND SUMMARY

The present invention provides a method according to claim 1 and a system according to claim 8, with preferred embodiments being defined in the dependent claims.

Aircraft in service are susceptible to corrosion, fatigue and accidental damages, which can be induced by service loads, environmental conditions or accidental impacts. These structural damages can be detected during a scheduled maintenance or during the aircraft operation (walkaround inspections). When the damage is detected through periodic scheduled inspection, usually the maintenance team has enough time to apply rework or repair procedures recommended by the aircraft manufacturer. On the other hand, when the damage is detected during the aircraft operation, the damage severity will determine whether the aircraft is in a condition for safe flight or whether it needs to be promptly removed from operation for repair.

Seeking safety improvement and reduction of maintenance cost and human error, efforts are underway to develop automatic SHM (Structural Health Monitoring) systems capable of inspecting and detecting damages in real time without need for human interference or attention. Therefore, new SHM technologies will lead to early detection of damage that usually in the past were identified only through scheduled inspections.

Once damage is detected during aircraft operation by means of the conventional inspection methods or through SHM systems, a technical team performs a prompt damage assessment, determining the damage severity and avoiding flight delay or cancellation whenever safely possible.

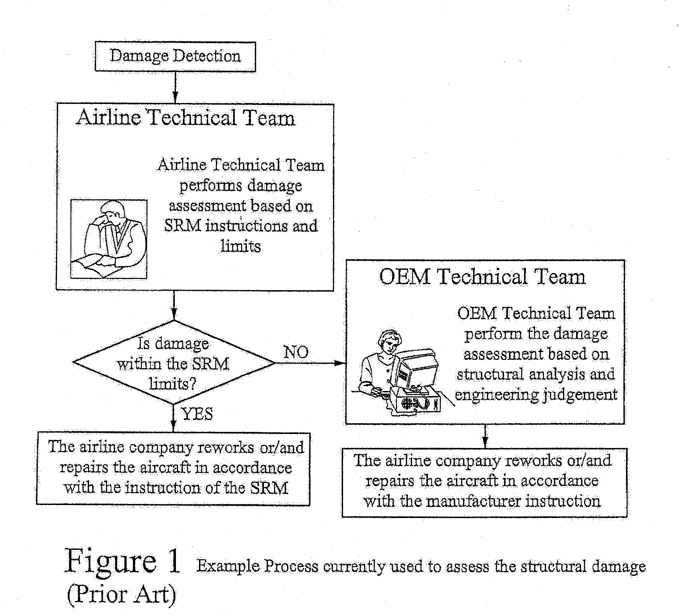

The effect of damage and repairs on the structural integrity of aeronautical structures is an aspect that should be evaluated in order to ensure the airworthiness and safe operation of the aircraft. Figure 1 presents a flowchart of a prior art process currently used by the aircraft operators and manufacturers to assess the structural damages that occur during the aircraft life.

After damage detection, the Airline Technical Team performs the damage assessment based on SRM (Structural Repair Manual) instructions. Basically, the information contained in the SRM permits the operators to assess typical damages and restore the structural integrity of the aircraft by means of a simple rework or repair installation.

If the damage is within the limits specified in the SRM document, the airline reworks and/or repairs the aircraft in accordance with SRM instructions.

According to the damage severity, the aircraft may be returned to service without repair. This kind of allowable damage must have no significant effect on the strength or fatigue life of the structure, which must still be capable of fulfilling its design function. Allowable damage may be contingent upon minimal rework, such as blend-out, cleanup or plugging a hole. Depending on its severity, some damages are allowed only for a specific period, called "fly-by period", in which during a number of flight cycles the aircraft can fly with the damage prior to repair. For more severe typical damage, the SRM contains sufficient information to enable the operator to carry out permissible repairs.

On the other hand, when the damage is not within the limits specified in the SRM or not covered by manual, the damage is evaluated by the aircraft manufacturer. An OEM Technical Team performs damage assessment based on structural analysis and engineering judgment and a specific rework or repair design will be developed or evaluated. Finally, the airline reworks or/and repairs the aircraft in accordance with manufacturer instructions.

There are some inefficiencies in the process presented above, such as the long time spent by the airline technical team consulting the SRM and assessing the damage based on its instructions. Additionally, due to human factors, mistakes can occur during this activity resulting in an incorrect damage disposition.

For cases in which the structural damage is not covered by the SRM, the airline contacts the aircraft manufacturer to evaluate the effect of damage or/and repair on the aircraft structural integrity and provide a specific disposition. Measurement of structural integrity degradation can be a complex task. The use of detailed structural analysis methodology usually demands a long time and, due to this fact, it becomes impractical for the aeronautical industry. Generally, simplifications are adopted for safety reasons which can lead to conservative analysis resulting in for example:
- Limited applicability of allowable damages and structural repairs;
- Reduced allowable damage limits causing unnecessary installation of structural repairs;
- Over dimensioned repairs;
- Flight delays and cancellations;
- Reduced inspection intervals that increase aircraft maintenance costs.

One prior method currently used to assess the structural damage, requires that the airline technical team consults the SRM and assesses the damage based on its instructions. There can be issues in this process, such as the long time spent by the airline technical team during this activity and the mistakes that can occur, due to human factors, resulting in an incorrect damage disposition. Besides that, some prior systems do not perform structural analysis in order to improve the damage disposition or provide a rework and/or repair solution when the damage is not within the limits specified in the SRM.

Another prior system uses an image of damaged structure as its primary input data and performs structural analysis without any previous verification if the damage is already covered by SRM and the disposition obtained based on the already issued SRM satisfy the operator needs. In addition, some systems do not generate a structural analysis report containing information of the accomplished analyses in order to substantiate the damage disposition.

A computerized and automated system specially developed in order to assess typical structural damages and repairs will lead to cost and safety benefits. The structural analysis automation allows the implementation of more detailed and accurate analysis methodology that reflects the actual behavior of the damaged or repaired structure and consequently improves the damage disposition.

The exemplary illustrative non-limiting technology herein consists of a system (herein called "iSRM") and a method for remote assessment of structural damage, repair and management of the applicable maintenance information.

The exemplary illustrative non-limiting iSRM (intelligent Structural Repair Management) system is able to provide electronic disposition for structural damage that occurs during the aircraft life. Also, this web application system is responsible for storage and management of the aircraft damage and repair information.

Using the system graphic interface via Web, Local Network and/or Local Computer, the Airline Technical Team can identify and register all structural damages, including allowable damage, fly-by, temporary repair and permanent repair. The graphic interface provides to the user a three-dimensional aircraft model (3D digital mock-up), enabling smooth navigation between different aircraft parts and enabling identification of the damaged location on the aircraft.

The management and traceability of the structural damages and repairs enable the Airline Technical Team to identify aircraft field issues and to control the damages and repairs life cycles, e.g., to provide benefits of management and traceability to the operators.

### BRIEF DESCRIPTION OF THE DRAWINGS

These and other features and advantages will be better and more completely understood by referring to the following detailed description of exemplary non-limiting illustrative embodiments in conjunction with the drawings of which:
Figure 1 is a flowchart of a prior art process currently used to assess the structural damage;
Figure 2 is a schematic diagram of an exemplary illustrative non-limiting iSRM Damage Assessment system;
Figure 3 is a flowchart of an exemplary illustrative non-limiting iSRM Damage Assessment Process; and
Figure 4 is a flowchart of an exemplary illustrative non-limiting iSRM Damage Assessment Process without the report approval sub-process.

### DETAILED DESCRIPTION

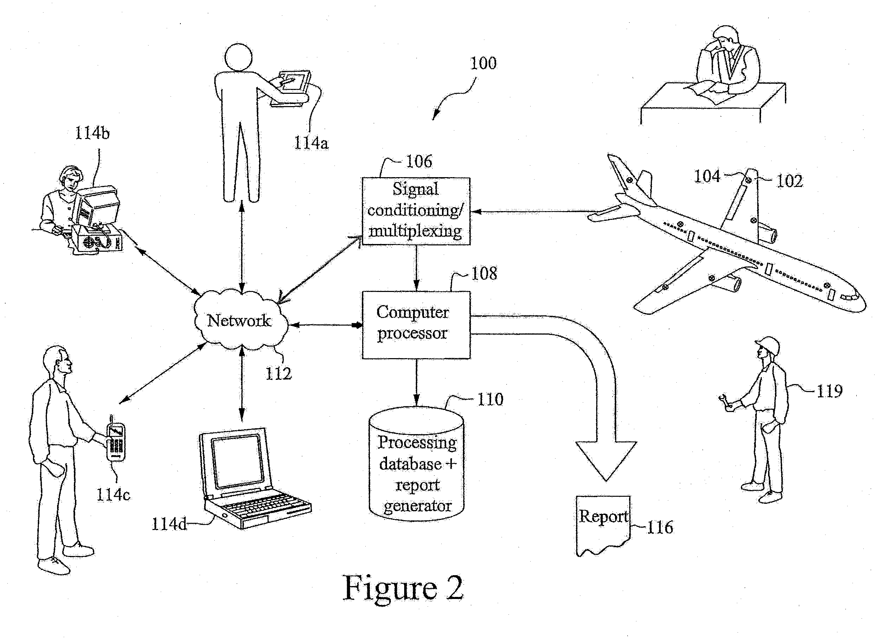

Figure 2 shows an example non-limiting iSRM damage assessment system 100. As shown in Figure 2, an aircraft 102 can be equipped with or otherwise inspected by a variety of sensors 104 to automatically detect structural or other damage. The damage can also be detected other than by automatically. For instance, damage can be detected visually (walkaround inspection). In such case, damage information can be provided by the Airline Technical Team to iSRM manually, using the iSRM interface (e.g., via an input device 114). For example, in one example non-limiting implementation, sensors 104 provide signals of various forms including but not limited to electrical signals related to the structural condition to a signal conditioning/multiplexing device 106 that in turn provides sensed signals to a computer processor 108. Signal conditioning/multiplexing block 106 may also receive additional manual or other inputs via network 112, or such additional inputs can be provided directly to computer processor 108 via a user interface that may be directly connected to the computer processor or indirectly connected e.g., via network 112. For example, the user may provide information on the damage detected (by various means) and, using the 3d model, he identifies the location of the damage.

Computer processor 108 uses software and data stored on a non-transitory storage device such as a disk drive, flash memory, etc. 110 to analyze the signals from sensors 104 as well as potentially other information inputs in order to detect whether the aircraft 102 has sustained damage. If damage has been sustained and has been characterized automatically via signal conditioning/multiplexing device 106 and/or manually using the iSRM interface via an input device 114, then computer processor 108 can use automatic and/or human-assisted algorithms to assess the severity of the damage e.g. based on stored damage information, structural properties, a flight history or other database stored on storage device 110.

Computer processor 108 may communicate alerts, reports, or other information via a wired and/or wireless network 112 to a variety of user interaction devices 114 included but not limited to laptop computers, smart phones, tablet computers, other personal computers or any other device that allows interactivity between humans and machines. Computer processor 108 may generate electronic, hardcopy or other reports 116 and transmit them for review by various people including service personnel 119, the manufacturer of the aircraft 102, the pilot of the aircraft, and others. It may also use software to maintain a 3D model of the particular aircraft, and render and display images on demand that enable smooth interactive navigation and display by the user between different aircraft parts and also enable identification of damaged locations of the aircraft. The example non-limiting system can further automatically enable users to manage damages, repairs and maintenance information comprising, but not limited to, providing visualization and generating reports for damages and repairs per aircraft and/or per fleet, and communicating alerts on inspection intervals for repair location.

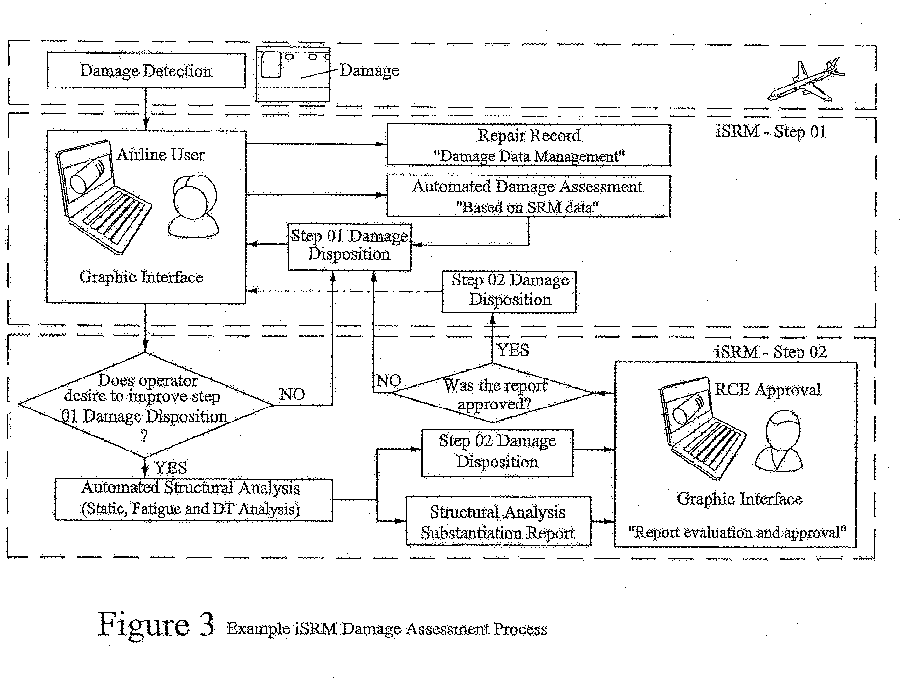

The Figure 3 is a flow chart of an example non-limiting damage assessment process implemented in an example iSRM system:

First, the damage is detected by means of conventional inspection methods and/or sensors 104 including for example visual and/or NDI (Non-Destructive Inspection, such as Eddy Current, X-Ray, Die Penetrant, Ultrasound, etc.), through SHM systems, such as acoustic emission system, CVM (Comparative Vacuum Monitoring) system, Lamb waves system, electromechanical impedance system, optical sensors and other sensors.

Using the system graphic interface via Web, Local Network 117 and/or Local Computer 114a, the Airline Technical Team characterizes the damage detected in the aircraft structure supplying damage information such as dimensions, damage type, location, affected areas, etc.

The system will assess the damage based on the damage information supplied by the user and the structural properties from the aircraft selected part in the 3D model and suggest an appropriate damage disposition. This analysis shall result in an allowable damage, fly-by, temporary repair, permanent repair or contact manufacturer for specific disposition.

As shown in Figure 3, the damage assessment is performed automatically by the system in one or two STEPS. In the first STEP, the damage disposition will be provided based on the already issued Structural Repair Manual (SRM). The system will compare the damage information supplied by the user with the limits specified in the SRM. Since the assessment will be made automatically by the system without human interference, the mistakes that nowadays can occur during SRM consultation will be reduced and during damage assessment based on its instructions will be eliminated.

Besides the disposition obtained in the first STEP, in case it is deemed necessary, it is possible to request a dedicated damage assessment. During this second STEP, the system will perform specific structural analysis in order to improve damage disposition. Based on engineering criteria and structural analysis, the system will perform a specific assessment for the detected damage considering several parameters such as damage type, geometry and dimensions of affected areas, material parameters, structure loads and so on.

In order to comply with applicable aeronautical requirements and substantiate the structural damage disposition in metallic or composite parts, the system will perform several structural analyses including but not limited to, when applicable, static analysis, fatigue analysis and damage tolerance analysis.

When applicable, based on several failure criteria (tensile, compression, buckling and post-buckling, crippling, durability, etc), a specific static analysis or/and fatigue analysis or/and damage tolerance analysis will be performed in order to evaluate the behavior of the damaged or repaired structure under static and cyclic loading (load spectrum).

Besides the repair or rework procedure, the system will provide, when applicable, the number of flight cycles allowed before the repair installation and the new inspection intervals for repair location. When applicable, during the damage tolerance analysis, a specific crack propagation analysis or damage growth analysis will be performed aiming to increase the fly-by period or inspection intervals obtained in the first STEP.

After completing the automated structural analysis, the system will generate a structural analysis substantiation report 116 containing information of the accomplished analyses and submit it for DER (Delegated Engineering Representative) evaluation and approval. Once the report is approved by DER, the damage disposition will be promptly made available to the airline for aircraft repair.

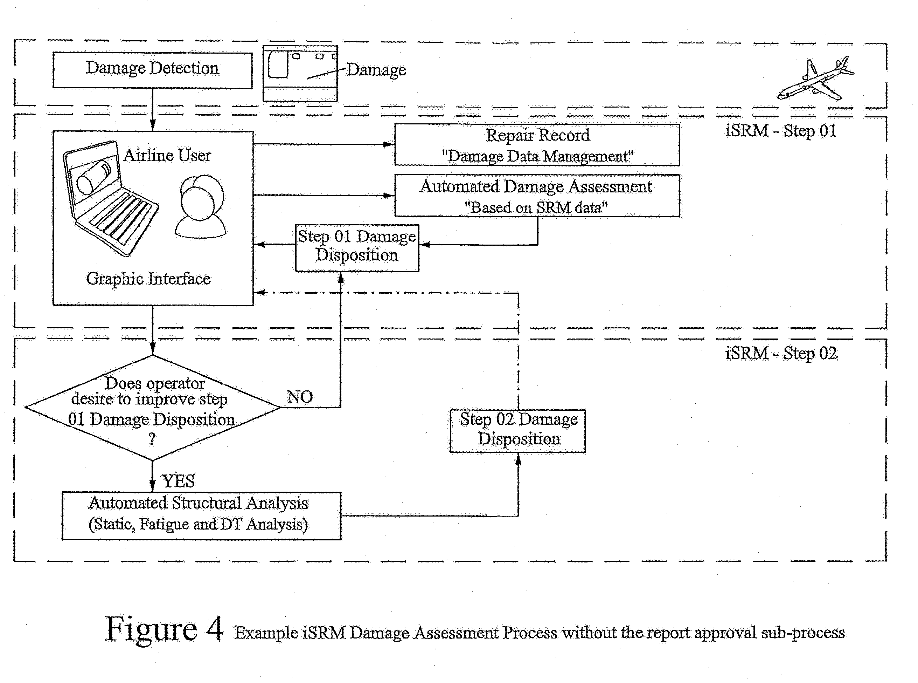

The report approval process will be necessary during the initial period until the certification authority has enough confidence in the system output or disposition. The Figure 4 presents a flow chart of an example non-limiting iSRM damage assessment process without the report approval sub-process.

Based on all aspects explained above, besides the optimization of the manufacturer engineering man-power, the structural analysis automation allows the implementation of more detailed or accurate analysis methodology that reflects the actual behavior of the damaged or repaired structure and consequently improves the resulting damage disposition for example as follows:
- Increase of the allowable damages and structural repairs applicability;
- Increase of the allowable damage limits causing the reduction of unnecessary installation of structural repairs;
- Optimized repairs;
- Increase of the fly-by periods and inspection intervals.

While the technology herein has been described in connection with exemplary illustrative non-limiting embodiments, the invention is not to be limited by the disclosure. The invention is intended to be defined by the claims and to cover all corresponding and equivalent arrangements whether or not specifically disclosed herein.

## Claims

1. Method, implemented in part by a computer including a processor (108), a user graphical interface (114) and a storage device (110), of analyzing structural damage to an aircraft, the method comprising:
using the user graphical interface for inputting data related to structural damage;
with the processor, suggesting a damage disposition by:
with the processor, analyzing the inputted structural damage data and suggesting a damage disposition based on the analying, which includes automatically comparing the input damage data with predetermined limits specified in an Structural Repair Manual associated with the aircraft (102); and
in case the user deems it necessary, with the processor (108) performing a specific structural analysis for the damage considering plural parameters including at least one of damages type, geometry and dimensions of damaged areas, material parameters, and structural loads and suggesting a thereby improved damage disposition;
wherein
said structural analysis includes at least one of static, fatigue and damage tolerance structural analysis;
said damage disposition includes defining categories as allowable damage, fly-by damage allowed only for a specific period, temporary repair, permanent repair and/or contacting the aircraft manufacturer for specific disposition; and
automatically, with the processor (108), a user is enabled to to manage structural damage, repairs and maintenance information.

2. The method of claims 1 further including generating an analysis results report; and conditioned on approval by a Delegated Engineering Representative of said analysis results report via a network, automatically by computer generating at least one maintenance or repair instruction.

3. The method of claims 1 further including performing a static and/or fatigue analysis based on tensile, compression, budding, post-buclding, crippling and/or durability failure criteria.

4. The method of claims 1 further including automatically providing the number of flight cycles allowed before the installation of a proposed repair.

5. The method of claims 1 further including automatically providing new inspection intervals for repair location.

6. The method of claims 1 wherein the damage tolerance structural analysis includes performing a crack propagation or damage growth analysis.

7. The method of claims 1 further including management of damages, repairs and maintenance information comprising, providing visualization and generating analyses reports for damages and repairs per aircraft and/or per fleet, and communicating alerts on inspection intervals for repair location.

8. A system for analyzing structural damage to an aircraft comprising:
a computer including a processor (108), a graphical user interface enabling a user to input data related to structural damage (114) and a storage device (110), the processor being configured to:
analyze the inputted data;
suggest a damage disposition based on the analyzing, which includes automatically comparing the characterized damage with predetermined limits in an aircraft's Structural Repair Manual; and
depending on a user request, perform a specific structural analysis for the detected damage considering plural parameters including at least one damage type, geometry and dimensions of damaged areas, material parameters, and structural loads; wherein
said structural analysis includes at least one of static, fatigue and damage tolerance structural analysis; and
said damage disposition includes defining categories as allowable damage, fly-by damage allowed only for a specific period, temporary repair, permanent repair and/or contacting the aircraft manufacturer for specific disposition; and
to enable structural damages, repairs and maintenance information management for the user.

9. The system of claim 8 wherein the processor is further configured to automatically generate an analysis results report; and conditioned on approval by a Delegated Engineering Representative of said analysis results report, automatically generates at least one maintenance or repair instruction.

10. The system of claim 8 wherein the processor is further configured to perform a static and/or fatigue analysis based on tensile, compression, budding, post-buclding, crippling and/or durability failure criteria.

11. The system of claim 8 wherein the processor is further configured to automatically provide the number of flight cycles allowed before the installation of the proposed repair.

12. The system of claim 8 wherein the processor is further configured to automatically provide new inspection intervals for repair location.

13. The system of claim 8 wherein the processor is further configured to automatically perform a crack propagation or damage growth analysis.

14. The system of claim 8 wherein the processor is further configured to allow management of damages, repairs and maintenance information comprising, providing visualization and generating analyses reports for damages and repairs per aircraft and/or per fleet, and communicating alerts on inspection intervals for repair location.

## Patentansprüche

1. Verfahren, das teilweise von einem Computer, der einen Prozessor (108), eine grafische Benutzerschnittstelle (114) und eine Speichervorrichtung (110) aufweist, zum Analysieren von Strukturschäden an einem Luftfahrzeug implementiert wird, wobei das Verfahren Folgendes umfasst:
Verwenden der grafischen Benutzerschnittstelle zum Eingeben von Daten, die Strukturschäden betreffen;
Vorschlagen einer Schadensanordnung mit dem Prozessor durch:
Analysieren der eingegebenen Strukturschadensdaten und Vorschlagen einer Schadensanordnung auf Basis des Analysierens mit dem Prozessor, umfassend: automatisches Vergleichen der eingegebenen Schadensdaten mit vorbestimmten Grenzwerten, die in einem Strukturreparaturhandbuch, das zum Luftfahrzeug (102) gehört, spezifiziert sind; und
in dem Fall, dass der Benutzer es für notwendig erachtet, Durchführen einer spezifischen Strukturanalyse für den Schaden unter Berücksichtigung von mehreren Parametern, die mindestens eines von einem Schadenstyp, einer Geometrie und Abmessungen von Schadensbereichen, Materialparametern und Strukturlasten umfassen, und Vorschlagen einer dadurch verbesserten Schadensanordnung mit dem Prozessor (108);
wobei
die Strukturanalyse mindestens eines von einer Statik-, einer Ermüdungs- und einer Schadenstoleranzstrukturanalyse umfasst;
wobei die Schadensanordnung das Definieren von Kategorien als zulässige Schäden, Flugschäden, die nur für eine spezifische Periode zulässig sind, vorläufige Reparatur, permanente Reparatur und/oder Kontaktieren des Luftfahrzeugherstellers wegen einer spezifischen Anordnung umfasst und
es einem Benutzer mit dem Prozessor (108) automatisch möglich ist, Strukturschäden, Reparaturen und Wartungsinformationen zu verwalten.

2. Verfahren nach Anspruch 1, das ferner das Erzeugen eines Analyseergebnisberichts und vorbehaltlich der Genehmigung durch einen Delegated Engineering Representative des Analyseergebnisberichts via ein Netzwerk das automatische Erzeugen von mindestens einer Wartungs- oder einer Reparaturanweisung durch einen Computer umfasst.

3. Verfahren nach Anspruch 1, das ferner das Durchführen einer Statik- und/oder einer Ermüdungsanalyse auf Basis von Ausfallkriterien mit Bezug auf Zug, Stauchen, Beulen, Nachbeulen, Knicken und/oder Haltbarkeit umfasst.

4. Verfahren nach Anspruch 1, das ferner das automatische Bereitstellen der Anzahl von Flugzyklen, die vor der Installation einer beabsichtigten Reparatur zulässig sind, umfasst.

5. Verfahren nach Anspruch 1, das ferner das automatische Bereitstellen von neuen Inspektionsintervallen für den Reparaturort umfasst.

6. Verfahren nach Anspruch 1, wobei die Schadenstoleranzstrukturanalyse das Durchführen einer Rissausbreitungs- oder einer Schadensausweitungsanalyse umfasst.

7. Verfahren nach Anspruch 1, das ferner die Verwaltung von Schäden, Reparaturen und Wartungsinformationen umfassend das Bereitstellen einer Visualisierung und das Erzeugen von Analyseberichten für Schäden und Reparaturen pro Luftfahrzeug und/oder pro Flotte und das Kommunizieren von Hinweisen zu Inspektionsintervallen für den Reparaturort umfasst.

8. System zum Analysieren von Strukturschäden an einem Luftfahrzeug, das Folgendes aufweist:
einen Computer, der einen Prozessor (108), eine grafische Benutzerschnittstelle, die es einem Benutzer ermöglicht, Daten, die Strukturschäden (114) betreffen, einzugeben, und eine Speichervorrichtung (110) aufweist, wobei der Prozessor ausgelegt ist zum:
Analysieren der eingegebenen Daten;
Vorschlagen einer Schadensanordnung auf Basis des Analysierens, umfassend das automatische Vergleichen des charakterisierten Schadens mit vorbestimmten Grenzwerten in einem Strukturreparaturhandbuch eines Luftfahrzeugs; und
in Abhängigkeit von einer Benutzeranforderung Durchführen einer spezifischen Strukturanalyse für den Schaden unter Berücksichtigung von mehreren Parametern, die mindestens eines von einem Schadenstyp, einer Geometrie und Abmessungen von Schadensbereichen, Materialparametern und Strukturlasten umfassen;
wobei die Strukturanalyse mindestens eines von einer Statik-, einer Ermüdungs- und einer Schadenstoleranzstrukturanalyse umfasst und
wobei die Schadensanordnung das Definieren von Kategorien als zulässige Schäden, Flugschäden, die nur für eine spezifische Periode zulässig sind, vorläufige Reparatur, permanente Reparatur und/oder Kontaktieren des Luftfahrzeugherstellers wegen einer spezifischen Anordnung umfasst, und
Ermöglichen der Verwaltung von Strukturschäden, Reparaturen und Wartungsinformationen für den Benutzer.

9. System nach Anspruch 8, wobei der Prozessor ferner dazu ausgelegt ist, automatisch einen Analyseergebnisbericht zu erzeugen und vorbehaltlich der Genehmigung durch einen Delegated Engineering Representative des Analyseergebnisberichts mindestens eine Wartungs- oder eine Reparaturanweisung automatisch erzeugt.

10. System nach Anspruch 8, wobei der Prozessor ferner dazu ausgelegt ist, eine Statik- und/oder eine Ermüdungsanalyse auf Basis von Ausfallkriterien mit Bezug auf Zug, Stauchen, Beulen, Nachbeulen, Knicken und/oder Haltbarkeit durchzuführen.

11. System nach Anspruch 8, wobei der Prozessor ferner dazu ausgelegt ist, die Anzahl von Flugzyklen, die vor der Installation der beabsichtigten Reparatur zulässig sind, automatisch bereitzustellen.

12. System nach Anspruch 8, wobei der Prozessor ferner dazu ausgelegt ist, neue Inspektionsintervalle für den Reparaturort automatisch bereitzustellen.

13. System nach Anspruch 8, wobei der Prozessor ferner dazu ausgelegt ist, eine Rissausbreitungs- oder eine Schadensausweitungsanalyse automatisch durchzuführen.

14. System nach Anspruch 8, wobei der Prozessor ferner dazu ausgelegt ist, die Verwaltung von Schäden, Reparaturen und Wartungsinformationen, umfassend das Bereitstellen einer Visualisierung und das Erzeugen von Analyseberichten für Schäden und Reparaturen pro Luftfahrzeug und/oder pro Flotte, und das Kommunizieren von Hinweisen zu Inspektionsintervallen für den Reparaturort zu erlauben.

## Revendications

1. Procédé, implémenté en partie par un ordinateur comprenant un processeur (108), une interface utilisateur graphique (114) et un dispositif de stockage (110), pour l'analyse des dommages structurels d'un aéronef, ce procédé comprenant :
l'utilisation de l'interface utilisateur graphique pour l'entrée de données relatives aux dommages structurels ;
le processeur suggérant une disposition des dommages par :
le processeur analysant les données de dommages structurels entrées et suggérant une disposition des dommages sur la base de l'analyse, qui comprend la comparaison automatique des données de dommages entrées avec des limites prédéterminées dans un Manuel de Réparation Structurelle associé à l'aéronef (102) ;
dans le cas où l'utilisateur l'estime nécessaire, le processeur (108) effectuant une analyse structurelle spécifique des dommages en considérant plusieurs paramètres, y compris au moins un type de dommages, la géométrie et les dimensions des zones endommagées, des paramètres de matériaux, et des charges structurelles et suggérant ainsi une disposition améliorée des dommages ;
dans lequel ladite analyse structurelle comprend au moins une parmi une analyse structurelle de tolérance statique, à la fatigue et aux dommages ;
ladite disposition des dommages comprend la définition de catégories telles que des dommages admissibles, des dommages de survol permis seulement pendant une période spécifique, une réparation temporaire, une réparation permanente et/ou une prise de contact avec le fabricant de l'aéronef pour des dispositions spécifiques ; et
automatiquement, avec le processeur (108), un utilisateur peut gérer des informations concernant des dommages structurels, des réparations et une maintenance structurelle.

2. Procédé selon la revendication 1, comprenant en outre la génération d'un rapport de résultats d'analyse ; et, dans le cas d'une approbation, par un Représentant Technique Délégué, du rapport de résultats d'analyse, via un réseau, l'ordinateur générant automatiquement au moins un une instruction de maintenance ou de réparation.

3. Procédé selon la revendication 1, comprenant en outre la réalisation d'une analyse statique et/ou de fatigue sur la base de critères de traction, de compression, de flambage, de post-flambage, de grippage et/ou de défaut de durabilité.

4. Procédé selon la revendication 1, comprenant en outre la fourniture automatique du nombre de cycles de vol autorisés avant l'installation d'une réparation proposée.

5. Procédé selon la revendication 1, comprenant en outre la fourniture automatique de nouveaux intervalles d'inspection pour l'emplacement des réparations.

6. Procédé selon la revendication 1, dans lequel l'analyse structurelle de tolérance aux dommages comprend la réalisation d'une analyse de la propagation d'une fissure ou de la propagation des dommages.

7. Procédé selon la revendication 1, comprenant en outre la gestion des informations concernant les dommages, les réparations et la maintenance, comprenant l'établissement, la visualisation et la génération de rapports d'analyse pour les dommages et les réparations pour chaque aéronef et/ou pour chaque flotte et la communication d'alertes sur des intervalles d'inspection pour l'emplacement d'une réparation.

8. Système pour l'analyse de dommages structurels d'un aéronef, comprenant :
un ordinateur comprenant un processeur (108), une interface utilisateur graphique permettant à un utilisateur d'entrer des données relatives à des dommages structurels (114) et un dispositif de stockage (110), ce processeur étant conçu pour :
analyser les données entrées ;
suggérer une disposition des dommages sur la base de l'analyse, qui comprend la comparaison automatique des dommages caractérisés avec des limites prédéterminées dans un Manuel de Réparation Structurelle d'un aéronef ; et
en fonction une demande de l'utilisateur, la réalisation d'une analyse structurelle spécifique pour les dommages détectés en considérant plusieurs paramètres, y compris au moins un type de dommages, la géométrie et les dimensions des zones endommagées, des paramètres de matériaux et des charges structurelles ; dans lequel
ladite analyse structurelle comprend au moins une parmi une analyse structurelle de tolérance statique, à la fatigue et aux dommages ; et
ladite disposition des dommages comprend la définition de catégories telles que des dommages admissibles, des dommages de survol admis uniquement pendant une période spécifique, une réparation temporaire, une réparation permanente et/ou la prise de contact avec le fabricant de l'aéronef pour des dispositions spécifiques ; et
permettre une gestion par l'utilisateur des informations concernant les dommages structurels, les réparations et la maintenance.

9. Système selon la revendication 8, dans lequel le processeur est en outre conçu pour générer automatiquement un rapport de résultats d'analyse ; et dans le cas d'une approbation, par un Représentant Technique Délégué, dudit rapport de résultats d'analyse, générer automatiquement au moins une instruction de maintenance ou de réparation.

10. Système selon la revendication 8, dans lequel le processeur est en outre conçu pour effectuer une analyse statique et/ou de fatigue basée sur des critères de traction, de compression, de flambage, de post-flambage, de grippage et/ou de défaut de durabilité.

11. Système selon la revendication 8, dans lequel est en outre conçu pour fournir automatiquement le nombre de cycles de vol autorisés avant l'installation de la réparation proposée.

12. Système selon la revendication 8, dans lequel est en outre conçu pour fournir automatiquement de nouveaux intervalles d'inspection pour l'emplacement de la réparation.

13. Système selon la revendication 8, dans lequel le processeur est en outre conçu pour effectuer automatiquement une analyse de propagation des fissures ou des dommages.

14. Système selon la revendication 8, dans lequel le processeur est en outre conçu pour permettre la gestion des informations concernant les dommages, les réparations et la maintenance, y compris l'établissement, la visualisation et la génération de rapports d'analyse pour les dommages et les réparations pour chaque aéronef et/ou pour chaque flotte et la communication d'alertes sur des intervalles d'inspection pour l'emplacement d'une réparation.
